# EUROPÄISCHE PATENTSCHRIFT

(11) **EP 2 698 745 B1**
(45) Veröffentlichungstag und Bekanntmachung des Hinweises auf die Patenterteilung: **25.02.2015**
(21) Anmeldenummer: 12180527.9
(22) Anmeldetag: 15.08.2012
(51) Int. Cl.: G06K 19/00, A22C 18/00, B65B 25/06, G01G 19/00, G06Q 10/08

(54) **Vorrichtung für den Verkauf von Lebensmitteln**
Device for the sale of food
Dispositif de vente d'aliments

(43) Veröffentlichungstag der Anmeldung: 19.02.2014
(73) Patentinhaber: Vion GmbH, 86807 Buchloe (DE)
(72) Erfinder: Krause, Wolfram, 50668 Köln (DE); Barfuß, Norbert, 45739 Oer-Erkenschwick (DE); Heger, Freddy, 97535 Greßthal/Waserlosen (DE); Kirchner, Dirk, 63820 Elsenfeld (DE); Fimmel, Alexander, 63762 Großostheim (DE); Kölker, Johannes, 44581 Castrop-Rauxel (DE); Sticha, Martin, 67122 Altrip (DE)
(74) Vertreter: Buse, Mentzel, Ludewig Patentanwaltskanzlei

(56) Entgegenhaltungen:
- EP-A1- 2 463 815
- EP-A2- 1 980 977
- DE-A1-102007 026 836
- DE-U1-202011 109 260
- US-A- 4 852 415
- US-A- 4 990 792
- US-A1- 2002 054 940
- US-A1- 2004 177 011
- ">MeatRFID< Schlusssachbericht 2008", , 31. Dezember 2008 (2008-12-31), Seiten 1-165, XP55022147, Gefunden im Internet: URL:http://www.rfid-support-center.de/meat RFID [gefunden am 2012-03-16]

## Beschreibung

Bekannte Vorrichtungen werden verwendet, um Lebensmittel wie frische Fleischwaren in Supermärkten und anderen Verkaufsstätten dem Endverbraucher anzubieten. Dies geschieht häufig in Selbstbedienungstheken und -regalen. Die Vorrichtung ist dabei meist als Schale ausgeführt in der die Lebensmittel angeordnet sind. Üblicherweise ist sie, insbesondere bei der Verwendung für Fleischprodukte, verschlossen. Auf der Schale selbst und/oder der sie verschließenden Folie sind dann üblicherweise Angaben zum genauen Produkt, der Einwaage und Ähnliches angegeben. Gegebenfalls wird auch das Herkunftsland des Produktes angegeben.

Die EP 2 463 815 offenbart ein System zur Kennzeichnung von Fleischprodukten, mit dessen Hilfe sich Verbraucher über das gekaufte Fleisch informieren. Dazu wird die individuelle Chargennummer gemeinsam mit der Verpackungsuhrzeit als Strichcode auf die Einzelverpackung gedruckt. Der Käufer scannt diesen Code per Mobiltelefon und erhält dann die "Stammdaten" des Produkts, etwa Herkunftsort und Schlachtdatum. Über eine Registriernummer werden die Tiere einzeln erfasst; diese Nummer wird für die Produktkennzeichnung verwendet. Die Kennzeichen mit dem Verarbeitungsdatum werden in einer Datenbank erfasst.

Die US 2004/0177011 beschreibt ein System zur Kennzeichnung von Fleisch während der Verarbeitungskette vom Tier bis zur Einzelverpackung. Dazu werden in einer Datenbank für jedes Fleischstück ein Zeitstempel, eine Codierung des Herkunftsortes und ein individueller Code erfasst; diese Angaben druckt man auf ein RFID- oder Barcode-Etikett, das die Verpackung markiert.

Ein Code in Form von eingeprägten oder hochgeprägten Punkten für Lebensmittelverpackungen (Glasflaschen) ist in US 4,990,792 und für Flaschen aus Plastik in US 4,852,415 beschrieben.

Im Rahmen der Qualitätsüberwachung von Lebensmitteln sowie der genauen Rückverfolgbarkeit der Herkunft bestimmter Lebensmittel, wie beispielsweise Fleischwaren, ist es wichtig einzelne Vorrichtungen, in denen die Fleischwaren verpackt zum Endkunden geliefert werden, genau identifizieren zu können. Dies ist jedoch bei herkömmlichen Vorrichtungen nicht möglich und auch nicht vorgesehen.

Aufgabe der Erfindung ist es daher eine genaue Möglichkeit der Identifikation der Vorrichtungen vorzusehen, welche auch einen Rückschluss auf das genaue in jeder Vorrichtung befindliche Produkt bzw. Lebensmittel erlaubt. Weiterhin ist es Aufgabe der Erfindung ein entsprechendes Verfahren zu entwickeln, welches dafür sorgt, dass nachvollziehbar ist welche Lebensmittel sich in welcher Vorrichtung befinden.

Diese Aufgaben werden durch die Merkmale der Ansprüche gelöst.

Jede Vorrichtung erhält einen eigenen individuellen Code. Dieser ist von der Außenseite der Vorrichtung her lesbar und insbesondere am Boden befindlich. Hierdurch ist jede Vorrichtung einzeln von außen identifizierbar. Bei oder nach der Bestückung der Vorrichtung mit Lebensmitteln wird dann der Code an der Vorrichtung ausgelesen und einer dem Lebensmittel zugeordneten Kennung in einer Datenbank zugeordnet. Die Vorrichtung wird dann üblicherweise zusammen mit den entsprechenden Lebensmitteln an einen Endverbraucher veräußert. Durch den individuellen Code in jeder Vorrichtung ist jede Vorrichtung einzeln identifizierbar. Durch die Zuordnung der einzelnen Vorrichtung zu dem einzelnen Lebensmittel ist auch ein genauer Rückschluss darauf möglich, welches genaue Lebensmittel sich in welcher Vorrichtung befindet. Dadurch, dass der Code von der Außenseite der Vorrichtung her lesbar ist, ist es besonders einfach diesen auszulesen, da dies bereits dadurch geschehen kann, dass die Vorrichtung über einen Scanner, ein Lesegerät oder Ähnliches geführt wird, bei dem der Code automatisch ausgelesen wird.

Da die entsprechenden Codes vielfach nach Art eines Massenproduktes eingesetzt werden, ist es wichtig, dass sie möglichst preisgünstig in der Herstellung sind. Als Code können daher beispielsweise optoelektronisch lesbare Codes Verwendung finden, wie Barcodes, 2D-Codes oder Ähnliches. Bei der Verwendung als Barcode ist es vorteilhaft, einen Code zu verwenden der kein Handelsstrichcode ist und somit nicht von einer handelsüblichen Scannerkasse ausgelesen werden kann, um beim Verkauf des in der Vorrichtung befindlichen Lebensmittels keine Probleme an der Scannerkasse zu erhalten. Hier sind alphanumerische Codes, wie Code 39, Code 93 oder Code 128 vorteilhaft. Selbstverständlich können auch andere Codes sowie auch 2D-Codes vorgesehen werden. Solche Codes sind einfach druckbar und somit besonders preisgünstig herstellbar.

Selbstverständlich ist es auch möglich elektronische Codes vorzusehen, die beispielsweise auf einem Chip, einem Transponder, wie einem RFID-Tag oder Ähnlichem vorgesehen sind. Diese sind heutzutage ebenfalls preiswert in der Herstellung und einfach auszulesen. Viele Produkte, die an Endverbraucher verkauft werden sind schon mit derartigen Transpondern versehen, beispielsweise als Diebstahlschutz. Diese weisen jedoch üblicherweise keine individuellen Codes auf, sondern lediglich Codes, die an Portalen an den Ausgängen der Verkaufsstätte ausgelesen werden, wenn die gekennzeichneten Produkte nicht ordnungsgemäß bezahlt und die Codes entwertet wurden.

In einem bevorzugten Ausführungsbeispiel ist der Code mittels eines Etiketts mit der Vorrichtung verbindbar. Das Etikett wird dann auf die Vorrichtung aufgeklebt, aufgeschweißt oder anderweitig mit ihr verbunden. Bei optoelektronisch lesbaren Codes werden diese auf der der Vorrichtung abgewandten Seite des Etiketts aufgedruckt, bei elektronischen Codes können diese in das Etikett integriert sein. Je nach Material aus dem die Vorrichtung besteht, kann der Code auch auf die Vorrichtung aufgedruckt werden. Dies ist insbesondere bei optoelektronisch lesbaren Codes möglich.

In einem bevorzugten Ausführungsbeispiel wird die Vorrichtung für den Verkauf geschlossen, insbesondere mit einer Folie, die durch Schweißen, Kleben, Umwickeln oder Ähnlichem mit der Vorrichtung verbunden werden kann. Hierdurch verhindert man eine Verunreinigung der Lebensmittel oder auch den Verlust von Teilen des Lebensmittels durch Herausfallen oder Ähnliches. Gerade im Lebensmittelbereich, insbesondere bei frischen Fleischwaren, ist besondere Hygiene gefordert. Daher müssen die Produkte möglichst sauber und sicher vor Verunreinigungen verpackt werden.

Weiterhin bevorzugt ist es, die Vorrichtung noch zusätzlich mit einem Verkaufs-Etikett zu versehen. Auf diesem kann ein Handelsstrichcode, wie ein EAN-Code oder Ähnliches aufgebracht werden, jedoch auch Informationen über die in der Vorrichtung enthaltenen Lebensmittel, einschließlich Herkunft, Gewicht, Mindesthaltbarkeitsdatum und Ähnliches. Handelsstrichcodes sind bei Lebensmitteln sehr weit verbreitet und werden üblicherweise an den in Supermärkten und anderen Verkaufsstätten vorhandenen Scannerkassen automatisch eingescannt. Ein Handelsstrichcode kann auf der Oberseite der Vorrichtung vorgesehen sein, jedoch sind auch die Anbringung auf Seitenflächen oder am Boden der Vorrichtung üblich, damit die Kasse den Handelsstrichcode automatisch einscannt, sobald die Vorrichtung über den Scanbereich der Kasse bewegt wird.

Vorteilhafterweise besteht die Vorrichtung selbst aus einem Kunststoff wie PTFE. Dieser Kunststoff ist für Lebensmittel zugelassen, einfach und kostengünstig in der Herstellung und recycelbar. Aber auch andere Kunststoffe und generell andere Materialien sind für die erfindungsgemäße Vorrichtung einsetzbar und somit mit von dieser Erfindung umfasst.

Weitere Ausführungsbeispiele und Einzelheiten der Erfindung ergeben sich aus der nachfolgenden Beschreibung, den Unteransprüchen sowie den Zeichnungen. In den Zeichnungen ist die Erfindung in einem Ausführungsbeispiel dargestellt. Es zeigen
- Fig. 1:: Eine erfindungsgemäße Vorrichtung perspektivisch von oben,
- Fig. 2:: Eine erfindungsgemäße Vorrichtung perspektivisch von unten,
- Fig. 3:: Ein Bespiel eines erfindungsgemäßen individuellen Codes,
- Fig. 4:: Ein Beispiel eines Handelsstrichcodes.

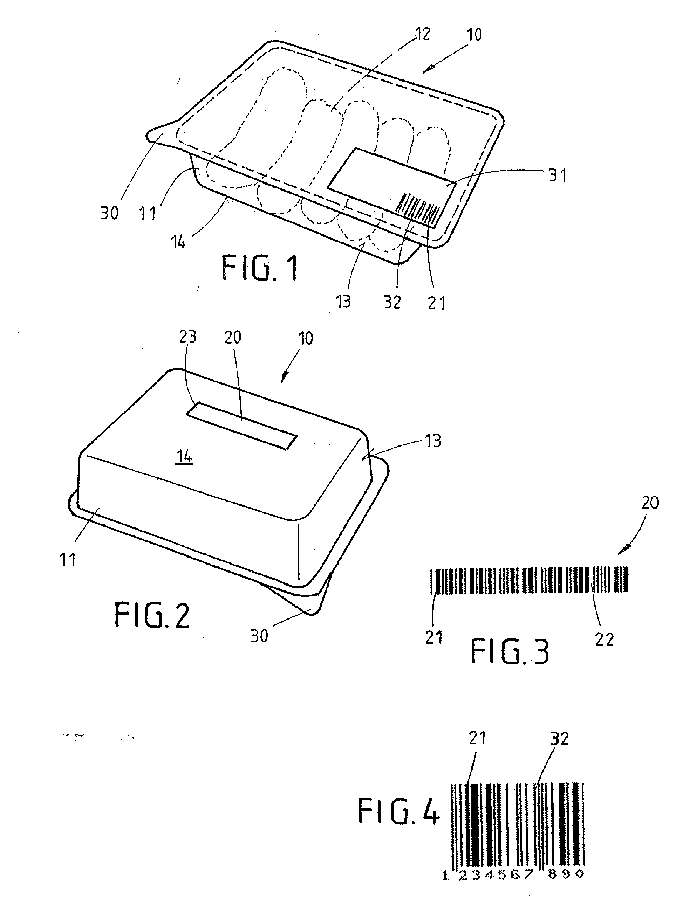

Die Fig. 1 und 2 zeigen eine Vorrichtung 10. Diese ist hier als Schale 11 ausgebildet. Wie in Fig. 1 erkennbar ist, befinden sich Lebensmittel 12 in der Schale 11, hier Fleischprodukte. Die Oberseite der Schale 11 wird von einer hier durchsichtigen Folie 30 verschlossen. So sind die Lebensmittel 12 vor Verunreinigungen und Ähnlichem geschützt, können jedoch trotzdem von einem interessierten Endverbraucher betrachtet werden.

An der Außenseite 13 der Schale 11, genauer gesagt am Boden 14, befindet sich ein Code 20 auf einem Etikett 23. Des Weiteren ist noch ein Verkaufs-Etikett 31 vorgesehen, auf welchem ein Handelsstrichcode 32 angeordnet ist. Dieser ist hier nur angedeutet dargestellt. Auch der Handelsstrichcode 32 ist ein Barcode 21. Das Verkaufsetikett 31 befindet sich hier an der Oberseite der Schale 11 auf der Folie 30. Selbstverständlich ist es auch möglich, den Handelsstrichcode 32 bzw. auch das Verkaufsetikett 31 an anderer Stelle vorzusehen, beispielsweise auf der Außenseite 13 der Schale 11 vorzusehen, insbesondere auch am Boden 14. Auch mehrere Verkaufsetiketten 31 können Verwendung finden.

Den exemplarischen Aufbau eines Codes 20 zeigt Figur 3. Dieser Code 20 ist als Barcode 21 ausgebildet und zwar als alphanumerischer Code. Im vorliegenden Ausführungsbeispiel handelt es sich um einen Code39 22. Solche alphanumerischen Codes können von üblichen Scannerkassen nicht gelesen werden, so dass es beim Einscannen des Handelsstrichcodes 32 nicht zu Problemen kommt. Über ein anderes handelsübliches Codelesegerät ist der Code 20, auch wenn er als alphanumerischer Code ausgebildet ist, jedoch einlesbar, so dass die einzelne Vorrichtung 10 identifizierbar ist.

Fig. 4 zeigt dann noch auszugsweise einen Handelsstrichcode 32. Dieser ist als in Deutschland und vielen anderen europäischen Staaten üblicher EAN-Code ausgebildet. Derartige Handelsstrichcodes 32 können von jeder üblichen Scannerkasse eingelesen werden, um das gekennzeichnete Produkt nach seiner Art zu identifizieren und den entsprechenden zugehörigen Preis festzustellen. Hierdurch wird das Kassierverfahren vereinfacht.

Bei dem oder kurz vor bzw. nach dem Bestücken der Vorrichtung 10 mit Lebensmitteln 12 kann der Code 20 eingelesen werden und mit einer dem Lebensmittel 12 zugeordneten Kennung in einer Datenbank verknüpft werden. So ist auf einfache Art und Weise eine genaue Identifizierung des in der Vorrichtung 10 befindlichen Lebensmittels 12 möglich. Auch zu einem späteren Zeitpunkt kann dies stattfinden, beispielsweise auch nach dem die Folie 30 bereits die Vorrichtung 10 verschlossen hat, indem der Code 20 durch einen Scanner bzw. ein Lesegerät ausgelesen wird. Durch eine Abfrage der Datenbank kann dann das genaue Lebensmittel 12, welches sich in der Vorrichtung 10 befindet, bestimmt werden.

Abschließend sei noch daraufhingewiesen, dass die hier dargestellten Ausführungsformen lediglich beispielhafte Verwirklichungen der Erfindung sind. Diese ist nicht darauf beschränkt. Vielmehr sind noch Abwandlungen möglich. Beispielsweise ist es möglich, der Vorrichtung eine andere Form zu geben. Auch können solche Vorrichtungen nicht nur für Fleischwaren, sondern auch für andere Lebensmittel Verwendung finden. Die Vorrichtung kann auch anders als durch eine Folie verschlossen werden, beispielsweise durch einen Deckel. Auch ist es möglich den Code auf eine andere Art und Weise vorzusehen.

### Bezugszeichenliste:

- 10: Vorrichtung
- 11: Schale
- 12: Lebensmittel
- 13: Außenseite von 11
- 14: Boden von 11
- 20: Code
- 21: Barcode
- 22: Code39
- 23: Etikett
- 30: Folie
- 31: Verkaufs-Etikett
- 32: Handelsstrichcode

## Patentansprüche

1. Verfahren zur Nachverfolgbarkeit der Herkunft von Lebensmitteln (12), unter Verwendung einer Vorrichtung (10), die nach Art einer Schale (11) ausgestaltet ist und in die Lebensmittel (12) aufnehmbar sind wobei die Lebensmittel (12) mit der Vorrichtung (10) verkauft werden wobei jede Vorrichtung (10) schon bei der Bestückung mit Lebensmitteln (12) einen Code (20) enthält, der an der Vorrichtung (10) von außen her lesbar ist und sich auf der Außenseite (13) der Vorrichtung (10) befindet **dadurch gekennzeichnet,**
**dass** jeder Code (20) individuell ist und jede der Vorrichtungen (10) einzeln identifiziert.

2. Verfahren nach Anspruch 1, **dadurch gekennzeichnet, dass** bei oder nach der Bestückung der Vorrichtung (10) mit Lebensmitteln (12) der Code (20) an der Vorrichtung (10) ausgelesen wird und mit einer dem Lebensmittel (12) zugeordneten Kennung in einer Datenbank zugeordnet wird.

3. Verfahren nach einem der Ansprüche 1 oder 2, **dadurch gekennzeichnet, dass** der Code (20) als Barcode (21), 2D-Code oder anderer optoelektronisch lesbarer Code ausgebildet ist.

4. Verfahren nach einem der Ansprüche 1 oder 2, **dadurch gekennzeichnet, dass** als Code (20) ein elektronischer Code vorgesehen ist, welcher auf einem Transponder wie einem RFID-Tag befindlich ist.

5. Verfahren nach einem der Ansprüche 1 bis 4, **dadurch gekennzeichnet, dass** der Code (20) mittels eines Etiketts (23) mit der Vorrichtung (10) verbunden ist.

6. Verfahren nach einem der Ansprüche 1 bis 4, **dadurch gekennzeichnet, dass** der Code (20) auf die Vorrichtung (10) aufgedruckt ist.

7. Verfahren nach einem der Ansprüche 1 bis 6, **dadurch gekennzeichnet, dass** die Vorrichtung (10) vor dem Verkauf geschlossen wird, insbesondere mit einer Folie (30), die durch Schweißen, Kleben, Umwickeln o.ä. mit der Vorrichtung (10) verbunden wird.

8. Verfahren nach einem der Ansprüche 1 bis 7, **dadurch gekennzeichnet, dass** ein Verkaufs-Etikett (31) an der Vorrichtung (10) angebracht wird, welches einen Handelsstrichcode (32) wie einen EAN-Code o.ä. und/oder Informationen über das in der Vorrichtung (10) enthaltene Lebensmittel (12) aufweist.

## Claims

1. Method for tracing the origin of foodstuff (12), using a device (10) equipped with a form of tray (11) that can be accepted in the foodstuff (12).
whereby, the foodstuff (12) is sold with the device (10)
whereby, each device (10) is already allocated a code (20) when loading with the foodstuff (12), is legible from the outside and is located on the outside (13) of the device (10)
**characterized in that**,
each code (20) is individual and individually identifies each of the devices (10).

2. Method in accordance with claim 1, **characterized in that** during, or after filling the device (10) with foodstuff (12), the code (20) on the device (10) is scanned and allocated an identifier, allocated to the foodstuff (12) in a database.

3. Method in accordance with one of the claims 1 or 2, **characterized in that** the code (20) is in the form of a barcode (21), 2-D code or another code that can be scanned optoelectronically.

4. Method in accordance with one of the claims 1 or 2, **characterized in that** the code (20) is provided as an electronic code that is located on a transponder, such as a RFID tag.

5. Method in accordance with one of the claims 1 to 4, **characterized in that** the code (20) is attached to the device (10) using a label (23).

6. Method in accordance with one of the claims 1 to 4, **characterized in that** the code (20) is printed on the device (20).

7. Method in accordance with one of the claims 1 to 6, **characterized in that** the device (10) is closed before being sold, in particular using a film (30) that is connected to the device (10) by thermal fusion, bonding, wrapping or similar.

8. Method in accordance with one of the claims 1 to 7, **characterized in that** a sales label (31) is attached to the device (10) that features a trade barcode (32), such as an EAN code or similar and/or information about the foodstuff (12) contained in the device (10).

## Revendications

1. Procédé permettant de retracer l'origine des produits alimentaires (12) en utilisant un dispositif (10) qui a la forme d'une coque (11) et dans laquelle il est possible de placer les produits alimentaires (12),
sachant que les produits alimentaires (12) sont vendus avec le dispositif (10) sachant que chaque dispositif (10) contient déjà un code (20) lors du garnissage avec des produits alimentaires (12), code qui est lisible de l'extérieur sur le dispositif (10) et qui se trouve sur le côté extérieur (13) du dispositif (10)
**caractérisé en ce que**
chaque code (20) est individuel et qu'il identifie individuellement chacun des dispositif (10).

2. Procédé selon la revendication 1, **caractérisé en ce que** lors du garnissage du dispositif (10) avec des aliments (12), ou après ce garnissage, le code (20) est lu sur le dispositif (10) et est mis en en correspondance, dans une base de données, avec un identifiant attribué au produit alimentaire (12).

3. Procédé selon l'une des revendications 1 ou 2, **caractérisé en ce que** le code (20) est configuré sous forme de code-barres (21), code 2D ou d'un autre code lisible par un procédé optoélectronique.

4. Procédé selon l'une des revendications 1 ou 2, **caractérisé en ce qu'**est prévu comme code (20) un code électronique qui se trouve sur un transpondeur, tel qu'un tag RFID.

5. Procédé selon l'une des revendications 1 à 4, **caractérisé en ce que** le code (20) est relié avec le dispositif (10) au moyen d'une étiquette (23).

6. Procédé selon l'une des revendications 1 à 4, **caractérisé en ce que** le code (20) est imprimé sur le dispositif (10).

7. Procédé selon l'une des revendications 1 à 6, **caractérisé en ce que** le dispositif (10) est obturé avant la vente, en particulier avec une feuille (30) qui est reliée au dispositif (10) par soudage, collage, enveloppement ou similaire.

8. Procédé selon l'une des revendications 1 à 7, **caractérisé en ce qu'**une étiquette de vente (31) est fixée contre le dispositif (10), qui présente un code-barres commercial (32) tel qu'un code EAN ou similaire et/ou des informations sur le produit alimentaire (12) contenu dans le dispositif (10).
